# EUROPÄISCHE PATENTSCHRIFT

(11) **EP 2 151 029 B1**
(45) Veröffentlichungstag und Bekanntmachung des Hinweises auf die Patenterteilung: **02.10.2013**
(21) Anmeldenummer: 08759854.6
(22) Anmeldetag: 21.05.2008
(51) Int. Cl.: H02B 11/133

(54) **VERRIEGELUNGSEINRICHTUNG, FRONTBAUGRUPPE, GERÄTETRÄGER SOWIE SCHALTSCHRANK**
LOCKING DEVICE, FRONT ASSEMBLY, DEVICE CARRIER AND CONTROL CABINET
DISPOSITIF DE VERROUILLAGE, MODULE FRONTAL, SUPPORT D'APPAREIL ET ARMOIRE DE COMMANDE

(30) Priorität: 25.05.2007 DE 102007024978
(43) Veröffentlichungstag der Anmeldung: 10.02.2010
(73) Patentinhaber: Siemens Aktiengesellschaft, 80333 München (DE)
(72) Erfinder: HIRSCHFELD, Stefan, 04207 Leipzig (DE); SCHMIDT, Mario, 04178 Leipzig (DE)
(86) Internationale Anmeldenummer: PCT/EP2008/056252
(87) Internationale Veröffentlichungsnummer: WO 2008/145580

(56) Entgegenhaltungen:
- DE-C1- 19 647 747

## Beschreibung

Die Erfindung betrifft eine Verrieglungseinrichtung für einen Geräteträger. Die Verriegelungseinrichtung weist einen mittels einer Handhabe an einer Frontplatte des Geräteträgers betätigbaren Hauptschalter, eine im Bereich der Frontplatte angeordnete Zugangsöffnung zum Einstecken eines Betätigungswerkzeuges zum Einstellen zweier oder mehrerer Schaltstellungen des Geräteträgers, eine Riegelplatte zur Umwandlung einer Drehbewegung der Handhabe und einer damit verbundenen Schaltwelle des Hauptschalters in eine Linearbewegung und einen an der Frontplatte angeordneten, vorgespannten und parallel zur Frontplatte beweglich geführten Handschieber, welcher bei Nichtbetätigung die Zugangsöffnung verschließt, auf.

Die Erfindung betrifft weiterhin eine Frontbaugruppe für einen Geräteträger, welche einen Handschieber zur Freigabe einer Zugangsöffnung zum Einstellen zweier oder mehrerer Schaltstellungen des Geräteträgers, eine Handhabe zum Betätigen eines Hauptschalters des Geräteträgers sowie eine derartige Verriegelungseinrichtung aufweist.

Weiterhin betrifft die Erfindung einen Geräteträger. Er weist einen im Bereich einer Frontplatte des Geräteträgers angeordneten Handschieber zur Freigabe einer Zugangsöffnung für ein Betätigungswerkzeug zum Einstellen zweier oder mehrerer Schaltstellungen des Geräteträgers auf. Zudem weist er eine Handhabe zur Drehbetätigung eines im Geräteträger angeordneten Hauptschalters sowie eine mit dem Handschieber und der Handhabe zusammenwirkende derartige Verriegelungseinrichtung auf.

Darüber hinaus weist der Geräteträger eine Frontplatte mit einer Aussparung zur Aufnahme einer derartigen Frontbaugruppe zum Einstellen zweier oder mehrerer Schaltstellungen des Geräteträgers und zum Betätigen eines Hauptschalters des Geräteträgers auf.

Schließlich betrifft die Erfindung einen Schaltschrank mit einer Vielzahl von Einschubfächern, in welche derartige Geräteträger entfernbar aufgenommen sind.

Insbesondere sind die Geräteträger Geräteeinschübe zum Einschieben in ein Einschubfach eines Schaltschrankes.

Aus dem europäischen Patent EP 0 937 323 B1 ist ein einschiebbarer Geräteträger für eine Schaltanlage bekannt. Er weist einen auf dem Geräteträger angeordneten Hauptschalter, eine Trennkontaktanordnung zur Verbindung eines mindestens den Hauptschalter einschließenden Stromkreises mit ortsfesten Leitern der Schaltanlage bei feststehendem Geräteträger, eine an der Frontseite des Geräteträgers zugängliche Trennkontaktwelle zur Betätigung der Trennkontaktanordnung sowie eine Verriegelungseinrichtung zur gegenseitigen Verriegelung des Hauptschalters und der Trennkontaktanordnung auf. Ferner weist der Geräteträger einen zu der Verriegelungseinrichtung gehörenden Sperrschieber zur Freigabe bzw. Sperrung der Betätigung der Trennkontaktwelle sowie eine gleichfalls zu der Verriegelungseinrichtung gehörende, durch eine Betätigungswelle des Hauptschalters mittels eines Kupplungshebels betätigbare Riegelstange auf, die bei betätigtem Sperrschieber durch korrespondierende Riegelöffnungen des Geräteträgers und eines diesen tragenden Fachbodens der Schaltanlage verschiebbar ist. Ein Lagerwinkel, der parallel zu diesem verschiebbar geführte Sperrschieber und ein zur Ausrichtung der Riegelstange auf die Riegelöffnung des Geräteträgers dienender Vorspannschieber bilden eine erste, am Geräteträger montierbare Baugruppe. Ein mit dem Lagerwinkel zu verbindendes Lagerblech für die Betätigungswelle des Hauptschalters sowie die Riegelstange und ein Schaltbewegungen der Betätigungswelle auf die Riegelstange übertragender Kupplungshebel bilden eine zweite, dem Hauptschalter zugeordnete Baugruppe. Dieses Dokument offenbart eine Einrichtung gemäss dem Oberbegriff des Anspruchs 1.

Geräteträger oder Geräteeinschübe sowie Schaltschränke sind allgemein bekannt. Sie werden insbesondere bei industriellen Anlagen in vielfältiger Weise eingesetzt. Durch die Einschubtechnik können elektrische und elektronische Baugruppen einfach zusammengestellt werden. Ein Auswechseln solcher Geräteträger ist auf einfache Weise bei unter Spannung stehender Anlage möglich. Es sind insbesondere bei Geräteträgern für Hochstrom- oder Hochspannungsanwendungen hohe Sicherheitsanforderungen einzuhalten, um eine mögliche Verletzung des Bedieners oder Schädigung der Komponenten eines Geräteträgers durch einen sich während des Herausziehens des Geräteträgers bzw. Geräteeinschubs bildenden Störlichtbogen im laufenden Betrieb zu vermeiden.

An derartige Anwendungen werden besonders hohe Sicherheitsanforderungen gestellt. So ist eine Vielzahl von Verriegelungsmechanismen, welche unter anderem ein Herausziehen des Geräteeinschubs aus einem Einschubfach oder eine Änderung der Schaltstellung des Geräteträgers während des Betriebs verhindern, unerlässlich.

Ausgehend von dem Stand der Technik ist es eine Aufgabe der Erfindung, eine Verriegelungseinrichtung für einen Geräteträger anzugeben, welcher eine verringerte Anzahl von Bauteilen und einen vereinfachten Aufbau aufweist, wobei die hohen Sicherheitsanforderungen weiterhin gewährleistet bleiben sollen.

Es ist eine weitere Aufgabe der Erfindung, eine Frontbaugruppe mit einer derartigen Verriegelungseinrichtung anzugeben.

Weiterhin ist es eine Aufgabe der Erfindung, einen Geräteträger mit einer derartigen Verriegelungseinrichtung bzw. einer derartigen Frontbaugruppe anzugeben.

Schließlich ist es eine Aufgabe der Erfindung, einen Schaltschrank mit einer Vielzahl von Einschubfächern anzugeben, in welche derartige Geräteträger, insbesondere Geräteeinschübe, entfernbar aufgenommen sind.

Die Aufgabe der Erfindung wird mit einer Verriegelungseinrichtung mit den Merkmalen des Anspruchs 1 gelöst. Vorteilhafte Ausgestaltungen der Verriegelungseinrichtung sind in den abhängigen Ansprüchen 2 und 3 genannt. Im Anspruch 4 ist eine Frontbaugruppe mit einer derartigen Verriegelungseinrichtung angegeben. In den Ansprüchen 5 bis 11 sind vorteilhafte Ausgestaltungen der Frontbaugruppe genannt. In den Ansprüchen 12 und 13 sind Geräteträger mit einer derartigen Verriegelungseinrichtung bzw. mit einer derartigen Frontbaugruppe angegeben. Im Anspruch 14 ist ein Schaltschrank angegeben, in welchem eine Vielzahl derartiger Geräteträger entfernbar aufgenommen ist. Im Anspruch 15 ist eine vorteilhafte Ausgestaltung des Schaltschrankes genannt.

Erfindungsgemäß weist die Riegelplatte einen Hauptschalterschieber auf, welcher derart fluchtend zum Handschieber angeordnet ist, dass der Handschieber bei eingeschaltetem Hauptschalter nicht in eine Geöffnetstellung verschiebbar ist und dass der Hauptschalter in der Geöffnetstellung des Handschiebers nicht einschaltbar ist.

Dadurch verringert sich vorteilhaft die Anzahl von Bauteilen zur Realisierung der erfindungsgemäßen Verriegelungseinrichtung. Im Vergleich zur Verriegelungseinrichtung nach dem Stand der Technik gemäß der EP 0 937 323 B1 weist die erfindungsgemäße Verriegelungseinrichtung einen erheblich einfacheren Aufbau auf. Darüber hinaus weist die erfindungsgemäße Verriegelungseinrichtung eine deutlich geringere Bautiefe auf.

Besonderes Merkmal der Erfindung ist der Hauptschalterschieber, welcher bei eingeschaltetem Hauptschalter dem Handschieber zur Freigabe einer Zugangsöffnung zum möglichen Ändern der Schaltstellung des Geräteträgers sozusagen direkt "im Wege" steht.

Nach einer besonderen Ausführungsform ist der Handschieber mit einem Verriegelungsschieber verbunden, welcher an seinem Ende eine Rastnase aufweist. Die Rastnase rastet im eingeschobenen Zustand des Geräteträgers und bei geschlossenem Handschieber in eine korrespondierende Verriegelungsöffnung einer Seiten- oder Trennwand eines Einschubfachs ein. Dadurch ist vorteilhaft ein Herausziehen eines Geräteträgers aus einem Einschubfach bei eingeschaltetem Hauptschalter, das heißt im laufenden Betrieb, nicht möglich.

Nach einer weiteren Ausführungsform ist der Handschieber gegenüber der Frontplatte abgedichtet ausgeführt. Dadurch ist eine Kapselung des Geräteträgers gemäß der Schutzklasse 54 gegen Staub und Spritzwasser vorteilhaft möglich. Dadurch wird ein Eindringen von Schmutz und Feuchtigkeit durch die Zugangsöffnung und weiter in das Innere des Geräteträgers verhindert.

Die Aufgabe der Erfindung wird weiterhin mit einer Frontbaugruppe für einen Geräteträger gelöst, welche einen Handschieber zur Freigabe einer Zugangsöffnung zum Einstellen zweier oder mehrerer Schaltstellungen des Geräteträgers, eine Handhabe zum Betätigen eines Hauptschalters des Geräteträgers und eine erfindungsgemäße Verriegelungseinrichtung aufweist. Eine derartige Frontbaugruppe kann als Baueinheit besonders kompakt realisiert werden.

Nach einer weiteren Ausführungsform weist die Frontbaugruppe ein Frontteil mit der Handhabe und dem Handschieber sowie ein Rückteil mit der Verriegelungseinrichtung, der Zugangsöffnung und der Schaltwelle des Hauptschalters auf. Die Frontbaugruppe ist zur Montage einer zwischen dem Frontteil und dem Rückteil angeordneten Frontplatte des Geräteträgers ausgebildet. Die Frontplatte weist eine entsprechende Aussparung auf. Bei der Montage der Frontbaugruppe kuppelt der Handschieber mit einem Mitnehmerschieber der Verriegelungseinrichtung. Zugleich kuppelt die Handhabe bzw. der Drehgriff mit der Schaltwelle des Hauptschalters.

Dadurch können unterschiedliche Ausführungsformen oder Typen eines Frontteils auf das Rückteil mit der dazwischen liegenden Frontplatte mit der Aussparung befestigt werden. Darüber hinaus ist ein einfacher Tausch eines beschädigten oder defekten Frontteils möglich.

Alternativ kann die Frontbaugruppe als einteilige Baueinheit zur Aufnahme in einer Aussparung der Frontplatte des Geräteträgers ausgebildet sein. Die Aussparung ist typischerweise rechteckförmig. Vorzugsweise sind die Abmessungen der Frontplattenaussparung auf die Abmessungen der Frontbaugruppe, insbesondere auf deren Höhe und Breite, abgestimmt, so dass die Frontbaugruppe in die Aussparung eingeschnappt bzw. eingerastet werden kann. Dadurch reduziert sich der Montageaufwand für einen derartigen Geräteträger erheblich.

Einer weiteren Ausführungsform zufolge ist der Handschieber beweglich im Frontteil der Frontbaugruppe aufgenommen. Zwischen dem Frontteil und/oder dem Handschieber ist ein Dichtelement angeordnet. Das Dichtelement kann beispielsweise eine Gummi- oder Filzdichtung sein. Die Dichtung kann am Handschieber oder an dem Frontteil angebracht sein. Alternativ kann auf den Handschieber oder auf das Frontteil eine Gummierung aufgebracht sein.

Nach einer bevorzugten Ausführungsform weist die Frontbaugruppe ein zweiteiliges, über die Zugangsöffnung mittels eines ersten oder zweiten Betätigungswerkzeuges betätigbares Schaltwellensystem zum Verfahren einer ersten und/oder zweiten Verfahrmechanik des Geräteträgers zum Einstellen zweier oder mehrerer Schaltstellungen des Geräteträgers auf. Es sind beide Schaltwellen gemeinsam über das zweite Betätigungswerkzeug betätigbar. Es ist die erste Schaltwelle nur über das erste Betätigungswerkzeug betätigbar.

Vorzugsweise ist das Schaltwellensystem zylindrisch und in axialer Richtung zweiteilig ausgeführt. Die beiden Schaltwellen weisen in diesem Fall an ihrem der Zugangsöffnung gegenüberliegenden Ende jeweils eine Verzahnung auf, die axial zueinander versetzt angeordnet sind. Bei der Verzahnung handelt es sich insbesondere um eine tangentiale Außenverzahnung.

Die Verzahnung der ersten Schaltwelle ist mit einer ersten Zahnstange der ersten Verfahrmechanik im Eingriff. Über die erste Zahnstange oder gegebenenfalls über eine noch dazwischen geschaltete Zahnscheibe kann ein Steuerstromstecker relativ zu einer Grundplatte des Geräteträgers seitlich, nach oben, nach unten oder nach hinten verfahren werden. Dadurch kann der Steuerstromstecker einen im Schaltschrank fest angebrachten Gegenstecker kontaktieren.

Die Verzahnung der zweiten Schaltwelle ist mit einer zweiten Zahnstange der zweiten Verfahrmechanik im Eingriff. Über die zweite Zahnstange oder gegebenenfalls über eine noch dazwischen geschaltete Zahnscheibe kann ein Hauptstromstecker relativ zu einer Grundplatte des Geräteträgers seitlich, nach oben, nach unten oder nach hinten verfahren werden. Dadurch kann der Hauptstromstecker einen im Schaltschrank fest angebrachten Gegenstecker zum möglichen Schalten von Energieversorgungsleitungen kontaktieren.

Über das erste Betätigungswerkzeug ist nur die erste Schaltwelle betätigbar. Dadurch ist eine Teststellung des Geräteträgers einstellbar, indem der Steuerstromstecker zum Testen des Geräteträgers den schaltschrankfesten Gegenstecker kontaktiert.

Über das zweite Betätigungswerkzeug sind beide Schaltwellen betätigbar. Dadurch ist eine Betriebsstellung des Geräteträgers einstellbar, indem der Steuerstromstecker und der Hauptstromstecker zugleich den jeweiligen schaltschrankfesten Gegenstecker kontaktieren.

Werden beide Schaltwellen nicht betätigt, so verbleibt der Geräteträger in einer inaktiven Trennstellung. In diesem Fall bleiben der Steuerstromstecker und der Hauptstromstecker eingefahren.

Nach einer weiteren Ausführungsform ist zur Anzeige der jeweiligen Schaltstellungen des Geräteträgers, das heißt der Test-, Betriebs- oder Trennstellung, eine im Rückteil der Frontbaugruppe beweglich angeordnete Anzeigeplatte vorhanden. Sie ist im Bereich der Zugangsöffnung angeordnet und durch eine Drehbewegung der ersten und/oder zweiten Schaltwelle bewegbar. Hierzu können die beiden Schaltwellen einen Nocken und/oder eine Ausnehmung an oder in den Schaltwellen zur Auslenkung der Anzeigeplatte aufweisen.

Nach einer weiteren Ausführungsform ist der Hauptschalter an das Rückteil der Frontbaugruppe anflanschbar. Dadurch vereinfacht sich die Montage bzw. die Fertigung eines Geräteträgers nochmals.

Die Aufgabe der Erfindung wird weiterhin mit einem Geräteträger, insbesondere mit einem Geräteeinschub zum Einschieben in ein Einschubfach eines Schaltschrankes, gelöst.

Der Geräteträger weist einen im Bereich einer Frontplatte des Geräteträgers angeordneten Handschieber zur Freigabe einer Zugangsöffnung für ein Betätigungswerkzeug zum Einstellen zweier oder mehrerer Schaltstellungen des Geräteträgers auf. Die mehreren Schaltstellungen sind insbesondere eine Test-, Betriebs- oder Trennstellung. Der Geräteträger weist zudem eine Handhabe, das heißt einen Drehgriff, zur Drehbetätigung eines im Geräteträger angeordneten Hauptschalters und eine mit dem Handschieber und der Handhabe zusammenwirkende erfindungsgemäße Verriegelungseinrichtung auf. In diesem Fall weist die Frontplatte eine Aussparung für die Zugangsöffnung und den diese verschließenden Handschieber sowie eine Aussparung zur Aufnahme der Handhabe auf.

Alternativ weist der Geräteträger, insbesondere der Geräteeinschub zum Einschieben in ein Einschubfach eines Schaltschrankes, eine Frontplatte mit einer Aussparung zur Aufnahme einer erfindungsgemäßen Frontbaugruppe zum Einstellen zweier oder mehrerer Schaltstellungen des Geräteträgers und zum Betätigen eines Hauptschalters des Geräteträgers auf. Im Geräteträger können Schaltmittel, die erste und zweite Verfahrmechanik und die über diese verfahrbaren Steuer- und Hauptstromstecker vormontiert sein. Der Geräteträger kann derart ausgebildet sein, dass mit Einsetzen oder mit Aufnahme der Frontbaugruppe die jeweilige Verzahnung der beiden Schaltwellen des Schaltsystems in die Verzahnung der ersten und/oder zweiten Verfahrmechanik zu deren Antrieb greift.

Die Aufgabe wird weiterhin mit einem Schaltschrank mit einer Vielzahl von Einschubfächern gelöst, in welche derartige erfindungsgemäße Geräteträger, insbesondere Geräteeinschübe, entfernbar aufgenommen sind.

Im Besonderen ist im Schaltschrank eine Vielzahl von Tragblechen und Seiten- oder Trennwänden angeordnet, welche jeweils ein Einschubfach zur Aufnahme eines Geräteträgers bilden. In den Seiten- oder Trennwänden eines jeweiligen Einschubfachs sind Verriegelungsöffnungen vorhanden bzw. eingebracht, in welche eine dazu korrespondierende Rastnase des jeweiligen Geräteträgers im eingeschobenen Zustand und bei geschlossenem Handschieber einrastbar ist. Dadurch ist vorteilhaft ein Herausziehen eines Geräteträgers bei eingeschaltetem Hauptschalter und somit im laufenden Betrieb nicht möglich. Bei ausgeschaltetem Hauptschalter kann der Einschub nur durch Verschieben des Handschiebers nach rechts aus dem Einschubfach entnommen werden.

Die Erfindung sowie vorteilhafte Ausführungen der Erfindung werden im Weiteren anhand der nachfolgenden Figuren näher beschrieben. Es zeigen
- FIG 1: beispielhaft einen Schaltschrank mit einer Vielzahl von aufgenommenen Geräteträgern nach dem Stand der Technik,
- FIG 2: eine Prinzipdarstellung der erfindungsgemäßen Verriegelungseinrichtung bei ausgeschaltetem Hauptschalter,
- FIG 3: die Verriegelungseinrichtung gemäß FIG 2 bei eingeschaltetem Hauptschalter,
- FIG 4: die Verriegelungseinrichtung gemäß FIG 2 bei ausgeschaltetem Hauptschalter und bei geöffnetem Handschieber,
- FIG 5: eine vorteilhafte Ausführungsform der erfindungsgemäßen Verriegelungseinrichtung,
- FIG 6: beispielhaft eine Riegelplatte mit einem Hauptschalterschieber als Teil der erfindungsgemäßen Verriegelungseinrichtung bei ausgeschaltetem Hauptschalter in einer konstruktiven Darstellung,
- FIG 7: den Teil der Verriegelungseinrichtung gemäß FIG 6 bei eingeschaltetem Hauptschalter,
- FIG 8: eine Explosionsdarstellung einer erfindungsgemäßen beispielhaften Frontbaugruppe eines Geräteträgers und
- FIG 9: beispielhaft einen erfindungsgemäßen Geräteträger in einer perspektivischen Ansicht.

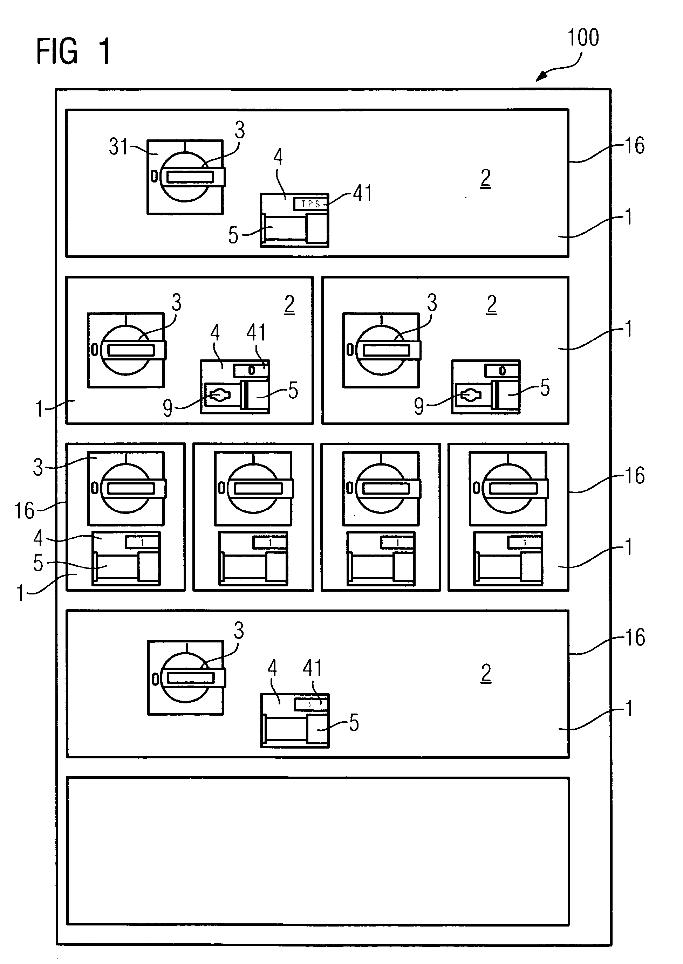

FIG 1 zeigt beispielhaft einen Schaltschrank 100 mit einer Vielzahl von aufgenommenen Geräteträgern 1 nach dem Stand der Technik. Im Beispiel der FIG 1 sind acht Geräteträger 1 im Schaltschrank 100 entfernbar aufgenommen. Mit dem Bezugszeichen 2 ist eine Front- oder Bedienseite des jeweiligen Geräteträgers 1 bezeichnet.

In der ersten und vierten Schaltschrankzeile ist jeweils ein über die gesamte Breite gehender Geräteträger 1 bzw. Geräteeinschub 1 eingeschoben. In jeweils nicht weiter gezeigten Aussparungen in einer Frontplatte 16 der jeweiligen Geräteeinschübe 1 ist eine Handhabe bzw. ein Drehgriff 3 sowie eine Antriebseinheit 4 zum Antreiben jeweils zweier Verfahrmechaniken angeordnet. Die gezeigten Antriebseinheiten 4 weisen einen Handschieber 5 auf, der in einer Geöffnetstellung eine Zugangsöffnung 9 für ein Betätigungswerkzeug zum Einstellen zweier oder mehrerer Schaltstellungen freigibt. Insbesondere umfassen die Schaltstellungen eine Test-, Betriebs- oder Trennstellung. Mit dem Bezugszeichen 41 ist eine Anzeigeplatte bezeichnet. Sie zeigt den jeweils aktuell eingestellten Schaltzustand des Geräteträgers 1 an.

Die darunter liegende Schaltschrankzeile weist zwei Einschubfächer zur Aufnahme zweier Geräteträger 1 mit einer im Vergleich zu den vorherigen Geräteträgern 1 halben Einschubbreite auf.

Die dritte Schaltschrankzeile weist vier Einschubfächer zur Aufnahme von vier Geräteträgern 1 mit jeweils einem Viertel der Einschubbreite des obersten Geräteträgers 1 auf.

Im Schaltschrank 100 sind beispielhaft, in der vorliegenden Darstellung jedoch nicht sichtbare, Stromschienen im linken hinteren Bereich des Schaltschrankes angeordnet. Von dort aus erfolgen Abzweigungen zu Gegensteckern, welche oberhalb oder unterhalb des jeweiligen Einschubfachs angeordnet sind. Mit diesen Gegensteckern können ein Haupt- und Steuerstromstecker des jeweiligen Geräteträgers 1 kontaktieren. Die Stecker sind zum Kontaktieren mittels der beiden Verfahrmechaniken vertikal verfahrbar.

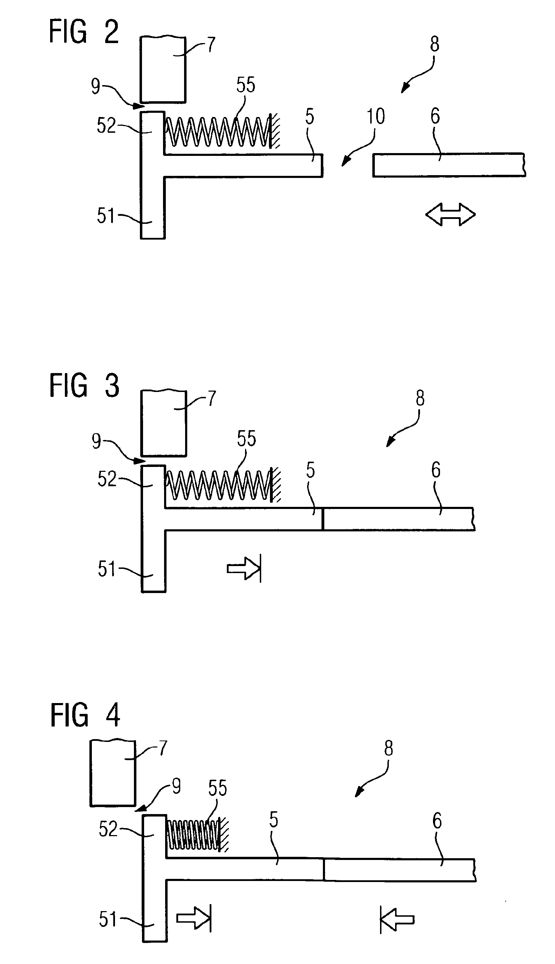

FIG 2 zeigt eine Prinzipdarstellung der erfindungsgemäßen Verriegelungseinrichtung 8 bei ausgeschaltetem Hauptschalter. Mit dem Bezugszeichen 7 ist ein Schaltwellensystem bezeichnet, welches zum Antreiben der Verfahrmechaniken im jeweiligen Geräteträger 1 vorgesehen ist. Wie die FIG 2 zeigt, ist eine Zugangsöffnung 9 durch einen Handschieber 5 verschlossen, so dass kein Betätigungswerkzeug zum Antreiben der Verfahrmechaniken eingesteckt werden kann. Der Handschieber 5 wird mittels einer Feder 55, insbesondere mittels einer vorgespannten Feder 55, im verschlossenen Zustand gehalten. Er ist vorzugsweise an der Frontplatte 16 des Geräteträgers 1 angeordnet, vorgespannt und parallel zur Frontplatte 16 beweglich geführt.

Im rechten Teil der FIG 2 ist ein Hauptschalterschieber 6 zusehen, welcher Teil einer nicht weiter dargestellten Riegelplatte ist. Sie ist zur Umwandlung einer Drehbewegung der Handhabe 3 bzw. des Drehgriffs und einer damit verbundenen Drehbewegung der Hauptschalter-Schaltwelle in eine Linearbewegung vorgesehen. Die Linearbewegung ist durch einen entsprechenden Pfeil unterhalb des Hauptschalterschiebers 6 symbolisiert. Zwischen dem Handschieber 5 und dem Hauptschalterschieber 6 ist ein Spalt 10 ausgebildet. Er lässt einerseits eine lineare Bewegung des Handschiebers 5 nach rechts zur Freigabe der Zugangsöffnung 9 und andererseits eine lineare Bewegung des Hauptschalterschiebers 6 nach links zum Einschalten des Hauptschalters zu.

FIG 3 zeigt die Verriegelungseinrichtung 8 gemäß FIG 2 bei eingeschaltetem Hauptschalter. Der Hauptschalterschieber 6 ist jetzt nach links gerückt. Da der Hauptschalterschieber 6 nun im Bewegungsweg des Handschiebers 5 angeordnet ist und diesen blockiert, kann der Handschieber 5 nicht mehr in eine Geöffnetstellung verschoben werden. Das Einführen eines Betätigungswerkzeuges in die Zugangsöffnung 9 des Schaltwellensystems 7 wird dadurch verhindert.

FIG 4 zeigt die Verriegelungseinrichtung 8 gemäß FIG 2 bei ausgeschaltetem Hauptschalter und bei geöffnetem Handschieber 5. In diesem Zustand blockiert der Handschieber 5 den Hauptschalter 6, so dass der Hauptschalter 15 nicht einschaltbar ist. In diesem Fall ist eine gefahr- und schadlose Änderung der Schaltstellung des Geräteträgers 1 möglich.

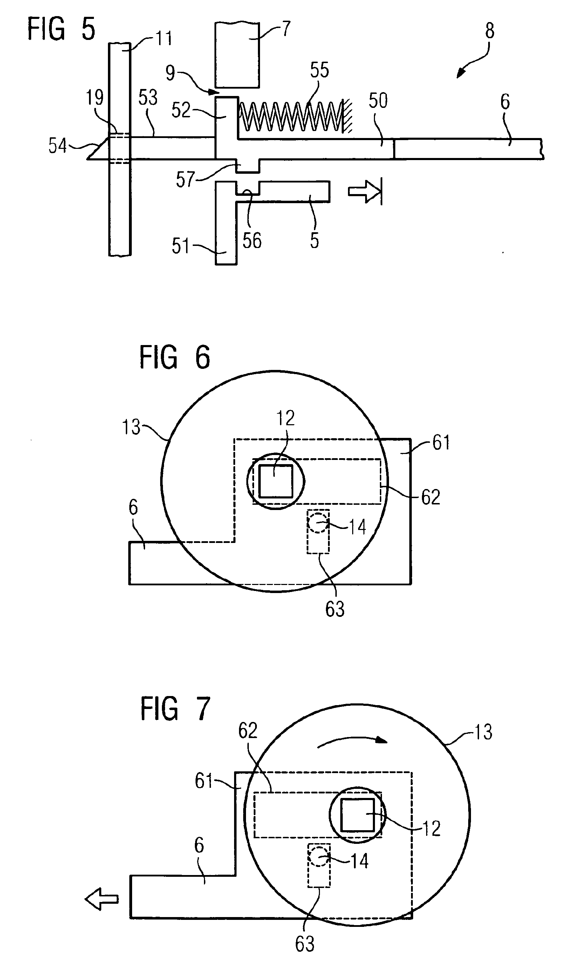

FIG 5 zeigt eine vorteilhafte Ausführungsform der erfindungsgemäßen Verriegelungseinrichtung 8. Der Handschieber 5 ist mit einem Verriegelungsschieber 53 verbunden, welcher an seinem Ende eine Rastnase 54 aufweist. Die Rastnase 54 weist eine Schräge auf, so dass diese im eingeschobenen Zustand des Geräteträgers 1 leicht in eine korrespondierende Verriegelungsöffnung einer Seiten- oder Trennwand des jeweiligen Einschubfachs einrasten kann. Eine Entriegelung ist nur dann möglich, wenn der Hauptschalter ausgeschaltet ist und wenn der Handschieber 5 zum Einfahren des Verriegelungsschiebers 53 nach rechts in die Geöffnetstellung geschoben wird.

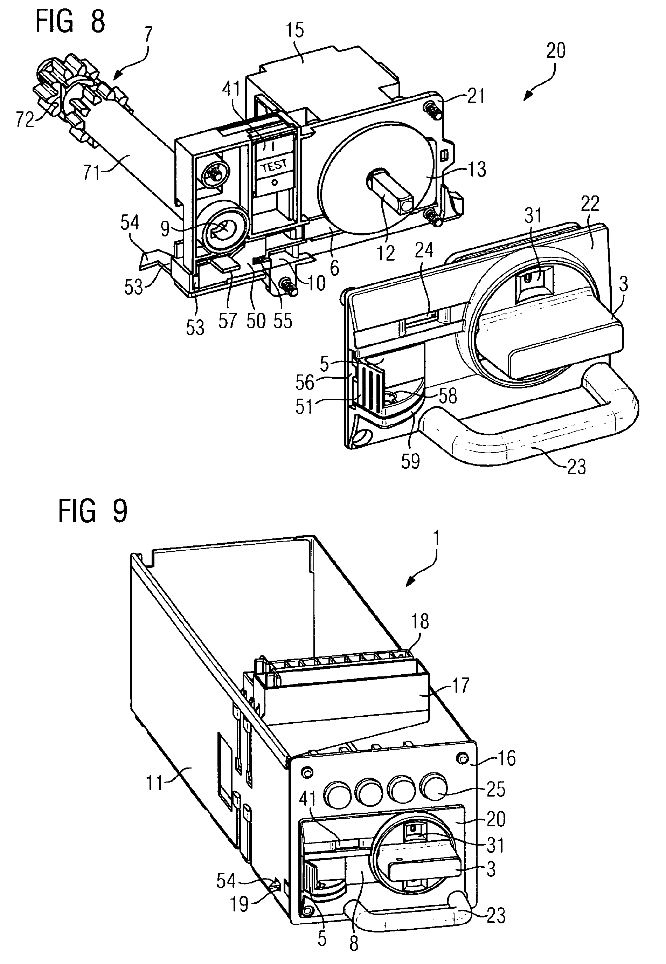

Im Beispiel der FIG 5 liegt der Handschieber 5 nur mittelbar im Bewegungsweg des Hauptschalterschiebers 6. Der Handschieber 5 ist hierzu mit einem Mitnehmerschieber 50 kuppelbar, wobei dann letzterer im Bewegungsweg des Hauptschalterschiebers 6 liegt. Die Kupplung wird beispielhaft durch eine Mitnehmernase 57 an dem Mitnehmerschieber 50 bewirkt, die in eine korrespondierende Aussparung 56 im Handschieber 56 greift. Mittels der Mitnehmerkupplung ist eine räumliche Trennung des Handschiebers 5 vom Rest der Verriegelungseinrichtung 8 möglich (siehe dazu auch FIG 8).

FIG 6 zeigt beispielhaft eine Riegelplatte 61 mit einem Hauptschalterschieber 6 als Teil der erfindungsgemäßen Verriegelungseinrichtung 8 bei ausgeschaltetem Hauptschalter in einer konstruktiven Darstellung. Die Riegelplatte 61 ist im einfachsten Fall ein flächiges Stanzteil mit zwei ausgestanzten Langlöchern 62, 63. Mit dem Bezugszeichen 13 ist eine drehfest mit der Schaltwelle 12 des Hauptschalters verbundene Mitnehmerscheibe bezeichnet. Auf der Mitnehmerscheibe 13 ist ein bolzenförmiger Mitnehmer 14 angeordnet.

FIG 7 zeigt den Teil der Verriegelungseinrichtung 8 gemäß FIG 6 bei nun eingeschaltetem Hauptschalter. Durch die Drehung der Mitnehmerscheibe 13 nach rechts wird die Riegelplatte 61 und somit der Hauptschalterschieber 6, geführt durch das erste Langloch 62 und angetrieben durch den Mitnehmer 14 im zweiten Langloch 63, nach links bewegt.

FIG 8 zeigt eine Explosionsdarstellung einer erfindungsgemäßen beispielhaften Frontbaugruppe 20 eines Geräteträgers 1. Die Frontbaugruppe 20 weist einen Handschieber 5 zur Freigabe einer Zugangsöffnung 9 zum Einstellen zweier oder mehrerer Schaltstellungen des Geräteträgers 1 auf. Sie weist eine Handhabe 3 zum Betätigen eines Hauptschalters 15 des Geräteträgers 1 sowie eine erfindungsgemäße Verriegelungseinrichtung 8 auf. Im Vergleich zur separaten Anordnung des Handschiebers 5 und der Antriebseinheit 4 beim Stand der Technik gemäß FIG 1 sind im vorliegenden Fall alle wesentlichen Teile des Verriegelungsmechanismus 8 in einer Baugruppe zusammengefasst.

Im Beispiel der FIG 8 weist die Frontbaugruppe 20 ein Frontteil 22 mit der Handhabe 3 und dem Handschieber 5 sowie ein Rückteil 21 mit der Verriegelungseinrichtung 8, der Zugangsöffnung 9 und der Schaltwelle 12 des Hauptschalters 15 auf. Das Frontteil 22, das Rückteil 21 sowie die Handhabe 3 und der Handschieber 5 sind typischerweise mittels eines Kunststoffspritzgussverfahrens hergestellt. Die Frontbaugruppe 20 ist zur Montage einer zwischen dem Frontteil 22 und dem Rückteil 21 angeordneten, in der vorliegenden Darstellung nicht gezeigten Frontplatte des Geräteträgers 1, ausgebildet. Die Frontplatte weist eine entsprechende Aussparung auf, die auf die Abmessungen der Frontbaugruppe 20, insbesondere auf deren Breite und Höhe, abgestimmt ist. Bei sachgemäßer Montage der Frontbaugruppe 20 wird der Handschieber 5 automatisch mit einem Mitnehmerschieber 50 der Verriegelungseinrichtung 8 gekuppelt. Außerdem wird die Handhabe 3 mit der Schaltwelle 12 des Hauptschalters 15 automatisch gekuppelt. Hierzu weist die Handhabe 3 eine in dieser Darstellung nicht sichtbare Kupplungsöffnung auf, die einen auf den vierkantigen Querschnitt der Hauptschalterwelle 12 korrespondierenden Innenquerschnitt aufweist.

Alternativ kann die Frontbaugruppe 20 als einteilige Baueinheit zur Aufnahme in einer Aussparung der Frontplatte des Geräteträgers 1 ausgebildet sein. In diesem Fall wird die Frontbaugruppe als Ganzes in die entsprechende Aussparung eingeschnappt oder eingerastet.

Im Beispiel der FIG 8 ist der Handschieber 5 beweglich im Frontteil 22 der Frontbaugruppe 20 aufgenommen. Zwischen dem Frontteil 22 und/oder dem Handschieber 5 ist vorzugsweise ein in der vorliegenden Darstellung nicht sichtbares Dichtelement angeordnet. Dadurch ist die Zugangsöffnung 9 bei geschlossenem Handschieber 5 gegenüber Umwelteinflüssen wie Staub und Feuchtigkeit geschützt. Das Dichtelement kann beispielsweise eine Gummi- oder Filzdichtung sein. Die Dichtung kann am Handschieber 5 oder an dem Frontteil 16 angebracht sein. Alternativ kann auf den Handschieber 5 oder auf das Frontteil 16 eine Gummierung aufgebracht sein.

Wie FIG 8 weiter zeigt, weist die Frontbaugruppe 20 ein zweiteiliges, über die Zugangsöffnung 9 mittels eines ersten oder zweiten Betätigungswerkzeuges betätigbares Schaltwellensystem 7 auf. Es ist zylindrisch und in axialer Richtung zweiteilig ausgeführt und dient zum Verfahren einer ersten und/oder zweiten Verfahrmechanik des Geräteträgers 1 zum Einstellen zweier oder mehrerer Schaltstellungen des Geräteträgers 1. Die Verfahrmechaniken selbst sind in der FIG 8 nicht weiter dargestellt. Das gezeigte Schaltwellensystem 7 weist eine erste und zweite Schaltwelle 71, 72 mit beispielhaft jeweils einer tangentialen Außenverzahnung zum Antreiben der Verfahrmechaniken auf.

Die beiden Schaltwellen 71, 72 sind gemeinsam über ein zweites Betätigungswerkzeug betätigbar, während die erste Schaltwelle 71 nur über ein erstes Betätigungswerkzeug betätigbar ist. Hierzu weist das zweite Betätigungswerkzeug einen im Vergleich zum ersten Betätigungswerkzeug längeren Mitnehmersteg auf. Der Mitnehmersteg ist derart bemessen, dass die beiden Schaltwellen 71, 72 bei Aufbringung eines Drehmoments gemeinsam verdreht werden können. Dagegen weist das erste Betätigungswerkzeug einen vergleichsweise kurzen Mitnehmersteg auf, so dass nur die erste Schaltwelle 71 in Drehung versetzt werden kann.

Weiterhin weist die Frontbaugruppe 20 zur Anzeige der jeweiligen Schaltstellungen des Geräteträgers 1, die mittels des Schaltwellensystems 7 einstellbar sind, eine im Rückteil 21 der Frontbaugruppe 20 beweglich angeordnete Anzeigeplatte 41 auf. Auf der Anzeigeplatte 41 sind drei Anzeigefelder zu sehen. Das erste Anzeigefeld "1" zeigt eine Betriebsstellung des Geräteträgers 1 an. Bei dieser Schaltstellung sind der über die erste und zweite Verfahrmechanik ausfahrbare Steuer-und Hauptstromstecker mit jeweils einem schaltschrankseitigen Gegenstecker kontaktierbar. Das zweite Anzeigefeld "TEST" zeigt eine Teststellung des Geräteträgers 1 an. In diesem Fall ist nur der über die erste Verfahrmechanik ausfahrbare Steuerstromstecker mit dem schaltschrankseitigen Gegenstecker kontaktierbar. Das Anzeigefeld "0" zeigt eine Trennstellung des Geräteträgers 1 an. In diesem Falle erfolgt überhaupt keine elektrische Kontaktierung des Geräteträgers 1 mit dem Schaltschrank 100. Steuerstromstecker und Hauptstromstecker sind in diesem Fall eingefahren.

Mit dem Bezugszeichen 24 ist ein Sichtfenster im Frontteil 22 der Frontbaugruppe 20 bezeichnet, in welchem die jeweils gültige Schaltstellung angezeigt wird. Die im Rückteil 21 der Frontbaugruppe 20 beweglich angeordnete Anzeigeplatte 41 ist im Bereich der Zugangsöffnung 9 angeordnet und durch eine Drehbewegung der ersten und/oder zweiten Schaltwelle 71, 72 bewegbar. Hierzu können die beiden Schaltwellen 71, 72 eine Nocke und/oder eine Ausnehmung an oder in den Schaltwellen 71, 72 zur Auslenkung der Anzeigeplatte 41 aufweisen.

Im Beispiel der FIG 8 weist ein Griffstück 51 des Handschiebers 5 eine Öffnung 58 auf. Dieser Öffnung 58 liegt eine weitere, nicht weiter bezeichnete Öffnung in einem feststehenden Gegenstück gegenüber. Im geschlossenen Zustand des Handschiebers 5, das heißt bei verschlossener Zugangsöffnung 9, kann der Handschieber 5 mittels eines Vorhängeschlosses gegen ein unbefugtes Öffnen gesichert werden. Eine Änderung der Schaltstellung des Geräteträgers 1 ist auf diesem Wege nicht möglich.

Wie die FIG 8 weiter zeigt, ist der Hauptschalter 15 bereits an das Rückteil 21 der Frontbaugruppe 20 angeflanscht. Vorzugsweise erfolgt die Befestigung über nicht weiter gezeigte Befestigungsschrauben oder über eine Rastbefestigung.

FIG 9 zeigt beispielhaft einen erfindungsgemäßen Geräteträger 1 in einer perspektivischen Ansicht. Der gezeigte Geräteträger 1 ist ein modularer Geräteeinschub 1 zum Einschieben in ein Einschubfach eines Schaltschrankes 100. Er weist, entsprechend dem Beispiel gemäß FIG 1, beispielhaft ein Viertel der Gesamtbreite der Einschubzeile des Schaltschrankes 100 auf. Der Geräteeinschub 1 kann alternativ auch eine davon unterschiedliche Breite aufweisen. Weiterhin weist der Geräteeinschub 1 eine Frontplatte 16 mit einer in dieser Darstellung nicht sichtbaren Aussparung zur Aufnahme einer erfindungsgemäßen Frontbaugruppe 20 zum Einstellen zweier oder mehrerer Schaltstellungen des Geräteeinschubs 1 und zum Betätigen eines Hauptschalters 15 des Geräteeinschubs 1 auf.

Im Beispiel der FIG 9 ist die Frontbaugruppe 20 zweiteilig ausgeführt. Die beiden Teile der Frontbaugruppe 20, das heißt das Rück- und Frontteil 21, 22, sind mit der dazwischenliegenden Frontplatte 16 miteinander verschraubt. Vorzugsweise wird das Frontteil 22 von dem Rückteil 21 der Frontbaugruppe 20 her verschraubt, so dass ein Entfernen des Frontteils 22 im eingebauten Zustand von der Frontseite 2 des Geräteeinschubs 1 her nicht möglich ist.

An der Frontplatte 16 sind weiterhin beispielhaft vier Leuchtmelder 25 zur Anzeige interner Schaltzustände des Geräteträgers 1 vorhanden. An der Unterseite der Frontplatte 16 ist ein Handgriff 23 dargestellt. Er dient zum erleichterten Einschieben und zum Herausziehen des Geräteeinschubs 1.

An der Oberseite in etwa der Mitte des Geräteträgers 1 sind ein Steuerstromstecker 17 sowie ein Hauptstromstecker 18 dargestellt. Sie sind mittels zweier in dieser Darstellung nicht erkennbarer Verfahrmechaniken vertikal verschiebbar, um entsprechenden schaltschrankseitigen Gegensteckern kontaktieren zu können. Die beiden Stecker 17, 18 sind in nutenförmigen Aussparungen in den Seitenwänden 11 des gezeigten Geräteeinschubs 1 geführt. Der Antrieb der beiden Stecker 17, 18 erfolgt mittels eines Schaltwellensystems 7 mit einer ersten und zweiten Schaltwelle 71, 72 gemäß dem Beispiel der FIG 8.

Im linken unteren Teil der FIG 9 ist eine Rastnase 54 eines Verriegelungsschiebers des Handschiebers 5 zu sehen. Er ragt aus einer Öffnung 19 in der Seitenwand 11 des Geräteeinschubs 1. Die Rastnase 54 verrastet beim Einschieben des Geräteeinschubs 1 mit einer entsprechenden Verriegelungsöffnung einer Seiten- oder Trennwand eines Einschubfachs. Ein Herausziehen des Geräteeinschubs 1 aus dem Einschubfachs während des laufenden Betriebes, das heißt bei eingeschaltetem Hauptschalter, wird dadurch verhindert. Eine Entriegelung ist nur dann möglich, wenn der Hauptschalter 15 ausgeschaltet ist und wenn der Handschieber 5 in die Geöffnetstellung geschoben wird.

Schließlich weist gemäß der Erfindung ein Schaltschrank 100 eine Vielzahl von Einschubfächern auf, in welche derartige erfindungsgemäße Geräteträger 1, insbesondere Geräteeinschübe, entfernbar aufgenommen sind. Dazu ist im Schaltschrank 100 eine Vielzahl von Tragblechen und Seiten- oder Trennwänden angeordnet, welche jeweils ein Einschubfach zur Aufnahme eines Geräteeinschubs 1 bilden. In den Seiten- oder Trennwänden eines Geräteeinschubs 1 sind entsprechende Verriegelungsöffnungen vorhanden, in welche eine dazu korrespondierende Rastnase 54 des jeweiligen Geräteträgers 1 im eingeschobenen Zustand und bei geschlossenem Handschieber 5 einrastbar ist.

### Bezugszeichenliste

- 1: Geräteeinschub, Einschubkassette
- 2: Frontseite
- 3: Handhabe des Hauptschalters
- 4: Antriebseinheit
- 5: Handschieber
- 6: Hauptschalterschieber
- 7: Schaltwellensystem
- 8: Verriegelungseinrichtung
- 9: Zugangsöffnung, Kurbelöffnung
- 10: Spalt
- 11: Seitenwand, Trennwand
- 12: Schaltwelle des Hauptschalters
- 13: Scheibe
- 14: Mitnehmernase
- 15: Hauptschalter
- 16: Frontplatte
- 17: Steuerstromstecker
- 18: Hauptstromstecker
- 19: Öffnung, Aussparung
- 20: Frontbaugruppe
- 21: Rückteil
- 22: Frontelement
- 23: Handgriff
- 24: Sichtfenster
- 25: Anzeigemittel, Leuchtmelder
- 31: Anzeigeplatte
- 41: Anzeigeschieber
- 50: Mitnehmerschieber
- 51: Griffstück
- 52: Gegenlager
- 53: Verriegelungsschieber
- 54: Verriegelungsnase
- 55: Spannfeder, Zylinderfeder
- 56: Ausnehmung
- 57: Mitnehmer
- 58: Öffnung für Vorhängeschloss
- 59: feststehendes Gegenstück
- 61: Riegelplatte
- 62: Schaltwellenlangloch
- 63: Mitnehmerlangloch
- 71: äußere Antriebswelle
- 72: innere Antriebswelle
- 100: Schaltschrank

## Patentansprüche

1. Verrieglungseinrichtung für einen Geräteträger (1), insbesondere für einen Geräteeinschub (1) zum Einschieben in ein Einschubfach eines Schaltschrankes (100), welche aufweist
- einen mittels einer Handhabe (3) an einer Frontplatte (16) des Geräteträgers (1) betätigbaren Hauptschalter (15),
- eine im Bereich der Frontplatte (16) angeordnete Zugangsöffnung (9) zum Einstecken eines Betätigungswerkzeuges zum Einstellen zweier oder mehrerer Schaltstellungen des Geräteträgers (1),
- eine Riegelplatte (61) zur Umwandlung einer Drehbewegung der Handhabe (3) und einer damit verbundenen Schaltwelle (12) des Hauptschalters (15) in eine Linearbewegung und
- einen an der Frontplatte (16) angeordneten, vorgespannten und parallel zur Frontplatte (16) beweglich geführten Handschieber (5), welcher bei Nichtbetätigung die Zugangsöffnung (9) verschließt,
**dadurch gekennzeichnet,**
**dass** die Riegelplatte (61) einen Hauptschalterschieber (6) aufweist, welcher derart fluchtend zum Handschieber (5) angeordnet ist, dass der Handschieber (5) bei eingeschaltetem Hauptschalter (15) nicht in eine Geöffnetstellung verschiebbar ist und dass der Hauptschalter (15) in der Geöffnetstellung des Handschiebers (5) nicht einschaltbar ist.

2. Verrieglungseinrichtung nach Anspruch 1,
**dadurch gekennzeichnet, dass** der Handschieber (5) mit einem Verriegelungsschieber (53) verbunden ist, welcher an seinem Ende eine Rastnase (54) aufweist, und dass die Rastnase (54) im eingeschobenen Zustand des Geräteträgers (1) und bei geschlossenem Handschieber (5) in eine korrespondierende Verriegelungsöffnung einer Seiten- oder Trennwand eines Einschubfachs einrastet.

3. Frontbaugruppe für einen Geräteträger (1), mit einem Handschieber (5) zur Freigabe einer Zugangsöffnung (9) zum Einstellen zweier oder mehrerer Schaltstellungen des Geräteträgers (1), mit einer Handhabe (3) zum Betätigen eines Hauptschalters (15) des Geräteträgers (1) und mit einer Verriegelungseinrichtung (8) nach Anspruch 1 oder 2.

4. Frontbaugruppe nach Anspruch 3,
**dadurch gekennzeichnet**
- **dass** die Frontbaugruppe ein Frontteil (22) mit der Handhabe (3) und dem Handschieber (5) sowie ein Rückteil (21) mit der Verriegelungseinrichtung (8), der Zugangsöffnung (9) und der Schaltwelle (12) des Hauptschalters (15) aufweist,
- **dass** die Frontbaugruppe zur Montage einer zwischen dem Frontteil (22) und dem Rückteil (21) angeordneten Frontplatte (16) des Geräteträgers (1) ausgebildet ist, wobei die Frontplatte (16) eine entsprechende Aussparung aufweist, und
- **dass** bei der Montage der Frontbaugruppe der Handschieber (5) mit einem Mitnehmerschieber (50) der Verriegelungseinrichtung (8) kuppelbar ist und dass die Handhabe (3) mit der Schaltwelle (12) des Hauptschalters (15) kuppelbar ist.

5. Frontbaugruppe nach Anspruch 3,
**dadurch gekennzeichnet, dass** die Frontbaugruppe als einteilige Baueinheit zur Aufnahme in einer Aussparung der Frontplatte (16) des Geräteträgers (1) ausgebildet ist.

6. Frontbaugruppe nach Anspruch 4 oder 5,
**dadurch gekennzeichnet, dass** der Handschieber (5) beweglich im Frontteil (22) der Frontbaugruppe aufgenommen ist und dass zwischen dem Frontteil (22) und/oder dem Handschieber (5) ein Dichtelement angeordnet ist.

7. Frontbaugruppe nach einem der Ansprüche 3 bis 6,
**dadurch gekennzeichnet,**
- **dass** die Frontbaugruppe ein zweiteiliges, über die Zugangsöffnung (9) mittels eines ersten oder zweiten Betätigungswerkzeuges betätigbares Schaltwellensystem (7) zum Verfahren einer ersten und/oder zweiten Verfahrmechanik des Geräteträgers (1) zum Einstellen zweier oder mehrerer Schaltstellungen des Geräteträgers (1) aufweist,
- **dass** beide Schaltwellen (71, 72) gemeinsam über das zweite Betätigungswerkzeug betätigbar sind und
- **dass** die erste Schaltwelle (71) nur über das erste Betätigungswerkzeug betätigbar ist.

8. Frontbaugruppe nach Anspruch 7,
**dadurch gekennzeichnet, dass** das Schaltwellensystem (7) zylindrisch und in axialer Richtung zweiteilig ausgeführt ist.

9. Frontbaugruppe nach Anspruch 7 oder 8,
**dadurch gekennzeichnet,**
- **dass** zur Anzeige der jeweiligen Schaltstellungen des Geräteträgers (1) eine im Rückteil (21) der Frontbaugruppe beweglich angeordnete Anzeigeplatte (41) vorhanden ist und
- **dass** die Anzeigeplatte (41) im Bereich der Zugangsöffnung (9) angeordnet und durch eine Drehbewegung der ersten und/oder zweiten Schaltwelle (71, 72) bewegbar ist.

10. Frontbaugruppe nach einem der Ansprüche 4 bis 9,
**dadurch gekennzeichnet, dass** der Hauptschalter (15) an das Rückteil (21) der Frontbaugruppe anflanschbar ist.

11. Geräteträger, insbesondere Geräteeinschub zum Einschieben in ein Einschubfach eines Schaltschrankes (100), mit
- einem im Bereich einer Frontplatte (16) des Geräteträgers angeordneten Handschieber (5) zur Freigabe einer Zugangsöffnung (9) für ein Betätigungswerkzeug zum Einstellen zweier oder mehrerer Schaltstellungen des Geräteträgers,
- einer Handhabe (3) zur Drehbetätigung eines im Geräteträger angeordneten Hauptschalters (15) und
- einer mit dem Handschieber (5) und der Handhabe (3) zusammenwirkenden Verriegelungseinrichtung (8) nach Anspruch 1 oder 2.

12. Geräteträger, insbesondere Geräteeinschub zum Einschieben in ein Einschubfach eines Schaltschrankes (100), mit einer Frontplatte (16) mit einer Aussparung zur Aufnahme einer Frontbaugruppe (20) nach einem der Ansprüche 3 bis 10 zum Einstellen zweier oder mehrerer Schaltstellungen des Geräteträgers und zum Betätigen eines Hauptschalters (15) des Geräteträgers.

13. Schaltschrank mit einer Vielzahl von Einschubfächern, in welche Geräteträger (1), insbesondere Geräteeinschübe, nach Anspruch 11 oder 12 entfernbar aufgenommen sind.

14. Schaltschrank nach Anspruch 13,
**dadurch gekennzeichnet,**
- **dass** im Schaltschrank eine Vielzahl von Tragblechen und Seiten- oder Trennwänden angeordnet ist, welche jeweils ein Einschubfach zur Aufnahme eines Geräteträgers (1) bilden, und
- **dass** in den Seiten- oder Trennwänden eines Einschubfachs Verriegelungsöffnungen vorhanden sind, in welche eine dazu korrespondierende Rastnase (54) des jeweiligen Geräteträgers (1) im eingeschobenen Zustand und bei geschlossenem Handschieber (5) einrastbar ist.

## Claims

1. Locking device for a device mount (1), in particular for a withdrawable unit (1) for insertion into a bay of a switchgear cabinet (100), which locking device has
- a master switch (15) which can be actuated by means of a handle (3) on a front panel (16) of the device mount (1),
- an access opening (9) which is arranged in the region of the front panel (16), for the insertion of an actuating tool for setting two or more switching positions of the device mount (1),
- a strike plate (61) for converting a rotary movement of the handle (3) and of a switching shaft (12), connected thereto, of the master switch (15) into a linear movement, and
- a manual slide (5), which is arranged on the front panel (16), is prestressed, is guided movably parallel to the front panel (16) and closes the access opening (9) when not actuated,
**characterized in that** the strike plate (61) has a master switch slide (6), which is arranged so as to be aligned with the manual slide (5) in such a way that the manual slide (5) cannot be moved into an open position when the master switch (15) is switched on and that the master switch (15) cannot be switched on in the open position of the manual slide (5).

2. Locking device according to Claim 1, **characterized in that** the manual slide (5) is connected to a locking slide (53), which has a latching lug (54) at its end, and **in that** the latching lug (54) latches into a corresponding locking opening of a side wall or separating wall of a bay in the inserted state of the device mount (1) and when the manual slide (5) is closed.

3. Front assembly for a device mount (1), with a manual slide (5) for releasing an access opening (9) for setting two or more switching positions of the device mount (1) with a handle (3) for actuating a master switch (15) of the device mount (1) and with a locking device (8) according to Claim 1 or 2.

4. Front assembly according to Claim 3, **characterized**
- **in that** the front assembly has a front part (22) with the handle (3) and the manual slide (5) and a rear part (21) with the locking device (8), the access opening (9) and the switching shaft (12) of the master switch (15),
- **in that** the front assembly is designed for fitting a front panel (16), which is arranged between the front part (22) and the rear part (21) of the device mount (1), the front panel (16) having a corresponding cutout, and
- **in that**, during fitting of the front assembly, the manual slide (5) can be coupled to a driver slide (50) of the locking device (8), and in that the handle (3) can be coupled to the switching shaft (12) of the master switch (15).

5. Front assembly according to Claim 3, **characterized in that** the front assembly is formed as an integral component to be accommodated in a cutout of the front panel (16) of the device mount (1).

6. Front assembly according to Claim 4 or 5, **characterized in that** the manual slide (5) is accommodated movably in the front part (22) of the front assembly and **in that** a sealing element is arranged between the front part (22) and/or the manual slide (5).

7. Front assembly according to one of Claims 3 to 6, **characterized**
- **in that** the front assembly has a two-part switching shaft system (7), which can be actuated via the access opening (9) by means of a first or second actuating tool, for moving a first and/or second movement mechanism of the device mount (1) for setting two or more switching positions of the device mount (1),
- **in that** the two switching shafts (71, 72) can be actuated together via the second actuating tool, and
- **in that** the first switching shaft (71) can only be actuated via the first actuating tool.

8. Front assembly according to Claim 7, **characterized in that** the switching shaft system (7) is designed to be cylindrical and in two parts in the axial direction.

9. Front assembly according to Claim 7 or 8, **characterized in that**
- **in that**, in order to display the respective switching positions of the device mount (1), a display panel (41) is provided which is arranged movably in the rear part (21) of the front assembly, and
- **in that** the display panel (41) is arranged in the region of the access opening (9) and can be moved by a rotary movement of the first and/or second switching shaft (71, 72).

10. Front assembly according to one of Claims 4 to 9, **characterized in that** the master switch (15) can be flange-connected to the rear part (21) of the front assembly.

11. Device mount, in particular a withdrawable unit for insertion into a bay of a switchgear cabinet (100), with
- a manual slide (5), which is arranged in the region of a front panel (16) of the device mount, for releasing an access opening (9) for an actuating tool for setting two or more switching positions of the device mount,
- a handle (3) for the rotary actuation of a master switch (15) arranged in the device mount, and
- a locking device (8) according to Claim 1 or 2 which interacts with the manual slide (5) and the handle (3).

12. Device mount, in particular a withdrawable unit for insertion into a bay of a switchgear cabinet (100), with a front panel (16) with a cutout for accommodating a front assembly (20) according to one of Claims 3 to 10 for setting two or more switching positions of the device mount and for actuating a master switch (15) of the device mount.

13. Switchgear cabinet with a large number of bays, into which device mounts (1), in particular withdrawable units, according to Claim 11 or 12 can be accommodated in such a way that they can be removed.

14. Switchgear assembly according to Claim 13, **characterized**
- **in that** a large number of supporting plates and side walls or separating walls are arranged in the switchgear cabinet and each form a bay for accommodating a device mount (1), and
- **in that** locking openings are provided in the side walls or separating walls of a bay, into which locking openings a corresponding latching lug (54) of the respective device mount (1) can be latched in the inserted state and when the manual slide (5) is closed.

## Revendications

1. Dispositif de verrouillage pour un support d'appareil (1), en particulier pour un tiroir d'appareil (1) destiné à être inséré dans un compartiment d'insertion d'une armoire de commande (100), comportant
- un commutateur principal (15), qui peut être actionné au moyen d'une manette (3) sur un panneau frontal (16) du support d'appareil (1),
- une ouverture d'accès (9) agencée au niveau du panneau frontal (16), qui permet d'insérer un outil d'actionnement pour régler deux ou plusieurs positions de commutation du support d'appareil (1),
- une plaque de verrouillage (61), qui permet de transformer un mouvement de rotation de la manette (3) et d'un arbre de commande (12) du commutateur principal (15) relié à la manette (3) en un mouvement linéaire, et
- une coulisse manuelle (5) placée sur le panneau frontal (16), précontrainte et guidée de façon mobile parallèlement au panneau frontal (16), qui ferme l'ouverture d'accès (9) en cas de non-actionnement,
**caractérisé en ce que** la plaque de verrouillage (61) comporte une coulisse (6) de commutateur principal placée dans l'alignement de la coulisse manuelle (5) de telle sorte que la coulisse manuelle (5) ne puisse venir en position ouverte quand le commutateur principal (15) est enclenché et que le commutateur principal (15) ne puisse être enclenché quand la coulisse manuelle (5) est en position ouverte.

2. Dispositif de verrouillage selon la revendication 1, **caractérisé en ce que** la coulisse manuelle (5) est reliée à une coulisse de verrouillage (53) présentant à son extrémité un bec d'encliquetage (54), et **en ce que** le bec d'encliquetage (54), à l'état inséré du support d'appareil (1) et lorsque la coulisse manuelle (5) est fermée, vient s'encliqueter dans une ouverture de verrouillage correspondante d'une cloison latérale ou de séparation d'un compartiment d'insertion.

3. Module frontal pour un support d'appareil (1), pourvu d'une coulisse manuelle (5) permettant de libérer une ouverture d'accès (9) pour régler deux ou plusieurs positions de commutation du support d'appareil (1), d'une manette (3) pour actionner un commutateur principal (15) du support d'appareil (1) et d'un dispositif de verrouillage (8) selon la revendication 1 ou 2.

4. Module frontal selon la revendication 3,
**caractérisé en ce que**
- le module frontal comporte une partie frontale (22) pourvue de la manette (3) et de la coulisse manuelle (5) ainsi qu'une partie arrière (21) pourvue du dispositif de verrouillage (8), de l'ouverture d'accès (9) et de l'arbre de commande (12) du commutateur principal (15),
- **en ce que** le module frontal est conçu pour le montage d'un panneau frontal (16) du support d'appareil (1) placé entre la partie frontale (22) et la partie arrière (21), le panneau frontal (16) présentant un évidement correspondant, et
- **en ce que** lors du montage du module frontal la coulisse manuelle (5) peut être couplée à une coulisse d'entraînement (50) du dispositif de verrouillage (8) et **en ce que** la manette (3) peut être couplée à l'arbre de commande (12) du commutateur principal (15).

5. Module frontal selon la revendication 3, **caractérisé en ce que** le module frontal est conçu sous forme d'ensemble d'un seul tenant destiné à être reçu dans un évidement du panneau frontal (16) du support d'appareil (1).

6. Module frontal selon la revendication 4 ou 5, **caractérisé en ce que** la coulisse manuelle (5) est logée de manière mobile dans la partie frontale (22) du module frontal et **en ce qu'**un élément d'étanchéité est placé entre la partie frontale (22) et/ou la coulisse manuelle (5).

7. Module frontal selon l'une des revendications 3 à 6, **caractérisé en ce que**
- le module frontal comporte un système d'arbre de commande (7) en deux parties, actionnable à travers l'ouverture d'accès (9) au moyen d'un premier ou deuxième outil d'actionnement, permettant de déplacer un premier et/ou deuxième mécanisme de déplacement du support d'appareil (1) pour régler deux ou plusieurs positions de commutation du support d'appareil (1),
- **en ce que** les deux arbres de commande (71, 72) peuvent être actionnés ensemble au moyen du deuxième outil d'actionnement, et
- **en ce que** le premier arbre de commande (71) ne peut être actionné qu'au moyen du premier outil d'actionnement.

8. Module frontal selon la revendication 7, **caractérisé en ce que** le système d'arbre de commande (7) est réalisé de façon cylindrique et en deux parties dans le sens axial.

9. Module frontal selon la revendication 7 ou 8, **caractérisé en ce que**
- pour afficher les positions de commutation respectives du support d'appareil (1), il est prévu un panneau d'affichage (41) placé de façon mobile dans la partie arrière (21) du module frontal est présent, et
- **en ce que** le panneau d'affichage (41) est placé au niveau de l'ouverture d'accès (9) et peut être déplacé par un mouvement de rotation du premier et/ou deuxième arbre de commande (71, 72).

10. Module frontal selon l'une des revendications 4 à 9, **caractérisé en ce que** le commutateur principal (15) peut se fixer par bride sur la partie arrière (21) du module frontal.

11. Support d'appareil, en particulier tiroir d'appareil destiné à être inséré dans un compartiment d'insertion d'une armoire de commande (100), comprenant
- une coulisse manuelle (5) placée au niveau d'un panneau frontal (16) du support d'appareil, permettant de libérer une ouverture d'accès (9) destiné à un outil d'actionnement pour régler deux ou plusieurs positions de commutation du support d'appareil,
- une manette (3) pour actionner en rotation un commutateur principal (15) placé dans le support d'appareil, et
- un dispositif de verrouillage (8) coopérant avec la coulisse manuelle (5) et la manette (3) selon la revendication 1 ou 2.

12. Support d'appareil, en particulier tiroir d'appareil destiné à être inséré dans un compartiment d'insertion d'une armoire de commande (100), comprenant un panneau frontal (16) pourvu d'un évidement destiné à recevoir un module frontal (20) selon l'une des revendications 3 à 10 pour régler deux ou plusieurs positions de commutation du support d'appareil et pour actionner un commutateur principal (15) du support d'appareil.

13. Armoire de commande comprenant une pluralité de compartiments d'insertion, dans lesquels des supports d'appareil (1), en particulier des tiroirs d'appareils, selon la revendication 11 ou 12 sont logés de façon amovible.

14. Armoire de commande selon la revendication 13, **caractérisée en ce que**
- une pluralité de tôles support et de cloisons latérales ou de séparation sont agencées dans l'armoire de commande, lesquelles forment respectivement un compartiment d'insertion destiné à recevoir un support d'appareil (1), et
- **en ce que** des ouvertures de verrouillage sont présentes dans les cloisons latérales ou de séparation d'un compartiment d'insertion, dans lesquelles un bec d'encliquetage correspondant (54) du support d'appareil respectif (1) peut venir s'encliqueter à l'état inséré de ce dernier et lorsque la coulisse manuelle (5) est fermée.
